Europäisches Patentamt

European Patent Office

Office européen des brevets

(11) Veröffentlichungsnummer: **0 207 549**
B1

(12) # EUROPÄISCHE PATENTSCHRIFT

(45) Veröffentlichungstag der Patentschrift:
25.04.90

(51) Int. Cl.⁴: **H01G 9/24, H01G 9/00**

(21) Anmeldenummer: 86201013.9

(22) Anmeldetag: 11.06.86

(54) Elektrolytischer Wickelkondensator.

(30) Priorität: 12.06.85 NL 8501684

(43) Veröffentlichungstag der Anmeldung:
07.01.87 Patentblatt 87/2

(45) Bekanntmachung des Hinweises auf die Patenterteilung:
25.04.90 Patentblatt 90/17

(84) Benannte Vertragsstaaten:
BE DE FR GB SE

(56) Entgegenhaltungen:
EP-A- 0 111 401
CH-A- 544 992
FR-A- 1 252 697
US-A- 2 232 320
US-A- 4 301 354
US-A- 4 320 281

(73) Patentinhaber: N.V. Philips' Gloeilampenfabrieken,
Groenewoudseweg 1, NL-5621 BA Eindhoven(NL)

(72) Erfinder: Weeber, Adrianus Anthonius Rudolphus, p/A
INT. OCTROOIBUREA B.V. Prof. Holstlaan 6, NL-5656 AA
Eindhoven(NL)
Erfinder: Slakhorst, Justinus William Hendrikus
Gerardus, p/A INT. OCTROOIBUREA B.V. Prof.
Holstlaan 6, NL-5656 AA Eindhoven(NL)
Erfinder: Voeten, Hendrik, p/A INT. OCTROOIBUREA
B.V. Prof. Holstlaan 6, NL-5656 AA Eindhoven(NL)

(74) Vertreter: Pennings, Johannes et al, Internationaal
Octrooibureau B.V. Prof. Holstlaan 6, NL-5656 AA
Eindhoven(NL)

## Beschreibung

Die Erfindung bezieht sich auf ein Verfahren zur Herstellung eines elektrischen Wickelkondensators, wie er beispielsweise annähernd aus der US-A 4 301 354 bekannt ist.

Ein elektrolytischer Wickelkondensator weist eine auf nur einer Seite mit einer Abdichtung versehene offene metallene Umhüllung und ein darin befindliches gewickeltes Gefüge aus einem durch Formierung mit einer dielektrischen Oxidhaut versehenen Streifen einer Aluminiumfolie, zwei oder mehrere mit Elektrolytflüssigkeit oder mit einem festen Halbleitermetalloxid imprägnierte Trennfolien und einen Streifen einer ggf. formierten zweiten Aluminiumfolie auf, die zusammen zu einem Wickel aufgewickelt sind.

Die Anodenfolie und die Kathodenfolie sind mittels einer aus dem Wickel herausragenden Zunge oder mittels eines Stiftes am Anfang eines Folienstreifens über eine Durchführungsöffnung in einer Scheibe oder über die Umhüllung mit den äusseren Anschlussdrähten bzw. Anschlussstiften verbunden. Es sind mehrere Ausführungen möglich, die jedoch alle den gemeinsamen Nachteil aufweisen, dass der innere Widerstand des Kondensators (esr) und die äquivalente Induktivität (esl) hoch sind. Dies führt wieder zu einem hohen Verlustfaktor (tgδ) und einer hohen esl sowie einer Verschlechterung der Kondensatoreingenschaften, je nachdem die Frequenz der Wechselspannung höher ist, bei der der Kondensator verwendet wird. Zur Verringerung des "esr" hat man die Kathodenfolie bzw. die Anodenfolie, abhängig von der Ausbildung des Kondensators mit mehreren Zungen versehen. Dies führte jedoch zu aufwendigen Bearbeitungen um die Zungen untereinander und mit dem Anschluss zu verbinden. Für Massenherstellung war dies bestimmt keine brauchbare Verbesserung.

Als Lösung des Problems wäre auch noch zu erwägen, kurze, breite Folien zu verwenden. Dies würde jedoch zu dünnen, hohen Kondensatoren führen, was für viele Anwendungsbereiche unerwünscht ist. Die Verwendung dicker Aluminiumfolien vergrössert das Volumen des Kondensators und ist kostspielig.

Die Erfindung hat nun zur Aufgabe, ein einfaches für Massenherstellung geeignetes Verfahren zum Herstellen eines derartigen Kondensators zu schaffen.

Der erfindungsgemässe Wickelkondensator weist dazu die kennzeichnenden Merkmale des Anspruchs auf.

Vorzugsweise besteht das Metall des Streifens aus demselben Metall wie die Folie. Zum Herstellen dieses Wickelkondensators wird auf einer der beiden Stirnseiten des Wickels eine radial orientierte Zunge oder dünne Platte gegen die ausgewickelten Folienwindungen gelegt und an zwei oder mehr Stellen mittels eines oder mehrerer Laserbündel darauf festgeschweisst.

Dieses Verfahren hat primär zum Zweck, den "esr" und die "esl" des Wickelkondensators auf eine für Massenherstellung zuverlässige und preistechnisch günstige Weise zu verringern.

Sekundär kann diese Funktion der Zunge mit der Funktion, eine Verbindung der Wickelfolien zu den Anoden- bzw. Kathodenanschlüssen auf der Aussenseite des fertigen Kondensatorerzeugnisses kombiniert werden. Letzteres wird in den Ausführungsbeispielen näher erläutert werden.

Das Verschweissen mittels eines Laserbündels ist die einzige Methode, mittels der die Verbindung fast ohne Andrücken auf eine zuverlässige Weise hergestellt werden kann. Andere Schweissverfahren, bei denen die Zunge bzw. Platte mit gewisser Kraft angedrückt werden muss, sind wegen der Beschädigung durch unerwünschten Kurzschluss zwischen den Kondensatorwindungen ungeeignet.

Es sei bemerkt, dass z.B. aus der US Patentschrift 3.906.297 ein Kondensator mit metallisierter Kunststofffolie bekannt ist, wobei ebenfalls zur Verringerung des Reihenwiderstandes eine axiale Verbindung der Metallisierungsschichten in aufeinanderfolgenden Windungen gemacht wird. Nach dieser Patentschrift wird diese Verbindung durch Aufspritzen eines geschmolzenen Metalles mit einem relativ niedrigen Schmelzpunkt und mit einer relativ niedrigen Wärmeleitfähigkeit hergestellt. Das Aufspritzen einer Schicht nach dem sog. Schoopschen Verfahren ist für diesen Zweck bei einem elektrolytischen Wickelkondensator unmöglich, denn die Abmessungen zwischen den ausgewickelten Windungen in einem Folienkondensator sind von einer völlig anderen Grössenordnung als in einem elektrolytischen Wickelkondensator, wodurch Kurzschluss entstehen könnte. Ausserdem dürften die üblichen Metalle, die in dem Schoopschen Verfahren angebracht werden, wie Zn-Sn in einem elektrolytischen Kondensator nicht verwendet werden. In einem Folienkondensator ist z.B. metallisierte Kunststofffolie mit einer Gesamtdicke von 1 bis 5 μm über 2 mm gegenüber gleicher Folie ausgewickelt. Bei einem elektrolytischen Wickelkondensator ist z.B. 100 μm dicke formierte Anodenfolie mit 80 μm an Papier und 20 bis 60 μm dicker Kathodenfolie aufgewickelt, wobei die Anodenfolie gegenüber der Kathodenfolie um 1 bis 2 mm ausgewickelt ist. Das Anbringen einer Schicht nach dem Schoopschen Verfahren führt hier zu einem unerwünschten Kurzschluss der Windungen. Die US Patentschrift 3.906.297 kann also den Fachmann nicht auf den Gedanken bringen, Folien in einem Wickelkondensator mittels Laserschweissen radial kurzzuschliessen.

Die Erfindung wird anhand der Zeichnung näher erläutert.

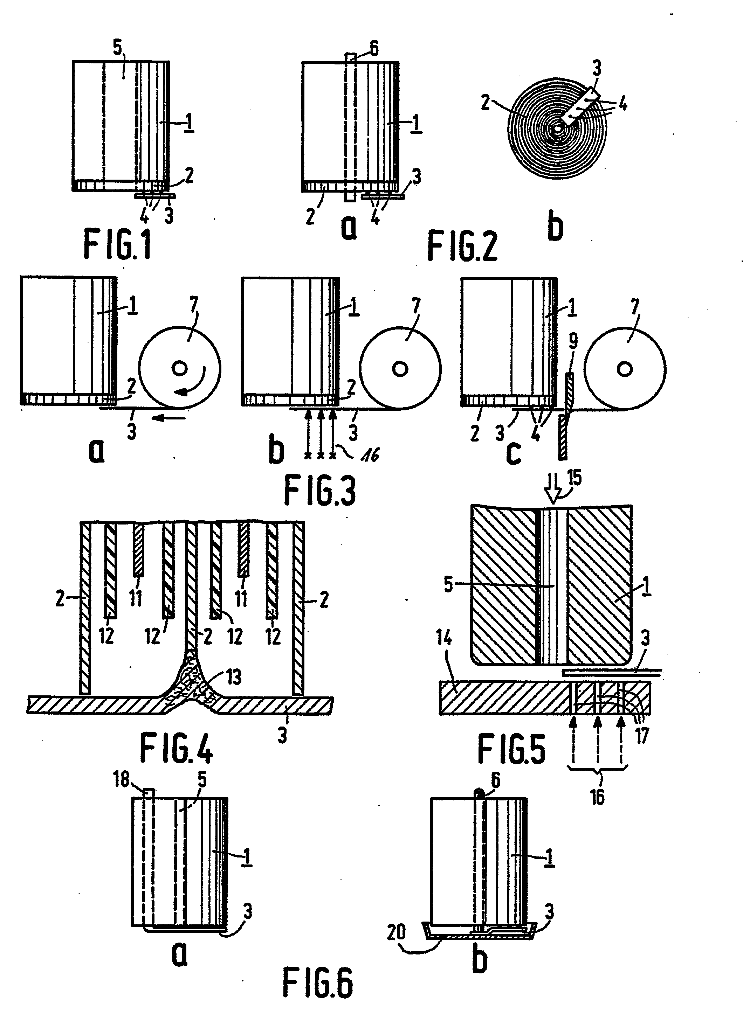

Die Fig. 1, 2a and 2b zeigen zwei Ausführungsformen 20 eines Wickels: in Fig. 1 ist der Wickel um einen Dorn gewickelt und hat folglich ein offenes Kernloch; in Fig. 2 ist der Wickel um einen Stift gewickelt und ist mit meistens einer der Folien breitseitig am Ende an dem Stift festgeschweisst. Der Stift bleibt beim Einbauen des Wickels in eine Umhüllung in dem Wickel und kann letzten Endes als Verbindung mit der Umhüllung bzw. dem Anodendeckel wirksam sein. Fig. 2a zeigt einen Schnitt, Fig. 2b eine zugeordnete Ansicht einer der Stirnseiten des Wickels.

In diesen Figuren ist 1 der Wickel, 2 der ausgewickelte Teil der Kathoden- bzw. Anodenfolie, 3 die Zunge bzw. Platte, die mit einer Anzahl Stellen 4 mit der Folie verschweisst ist. In Fig. 1 ist 5 das Dornloch und in Fig. 2 ist 6 der Wickelstift, an dem die ausgewickelte Folie 2 mit der kurzen Seite in der Längsrichtung festgeschweisst sein kann.

In Fig. 3 wird ein mögliches Verfahren zum Herstellen des zu schweissenden Wickels in einem Beispiel dargestellt, wobei eine Zunge von einer Rolle 7 zugeführt und mit dem Wickel verschweisst wird. Das Einbauen des Wickels in einer Umhüllung, das Herstellen der Anoden- und Kathodenverbindung, das Anbringen der Anschlussdrähte und das Abschliessen der Umhüllung wird nicht erläutert, weil es sich dabei um übliche Techniken handeln kann.

In Fig. 3a ist 1 wieder der Wickel, 2 der ausgewickelte Teil. Die Zunge 3 wird in Form eines Streifens von der Rolle 7 zugeführt. Fig. 3b zeigt das Festschweissen der Zunge 3 mittels einer Anzahl paralleler Laserbündel 16, z.B. über Glaslichtleiter. In Fig. 3c sind die Schweissverbindungen 4 hergestellt und die Zunge 3 wird mit Hilfe eines Messers 9 abgeschnitten.

Fig. 4 zeigt einen Teil des Wickels mit der Verschweissung in vergrössertem Massstab. Dabei ist 11 die Anodenfolie, 12 die Trennschicht (Papier; hier in einfacher Ausbildung) und 2 die ausgewickelte Kathodenfolie als Beispiel. An der Stelle 13 ist die Verbindung mit der Zunge 3 hergestellt. Ein direktes Laserschweissen ohne Zunge 3 ist nicht möglich. Die Zunge 3 dient dazu, dass es für die erforderliche Abschmelzmenge einen ausreichenden Materialvorrat gibt.

In Fig. 5 wird dargestellt, wie eine zuverlässige Schweissverbindung durch eine genaue Fokussierung der Laserbündel 16 erhalten werden kann. In dem festen Anschlag 14 gibt es Öffnungen 17 für die Laserbündel. Der Wickel 1 wird mittels der Kraft 15 über die Zunge 3 gegen den Anschlag gedrückt, der als Bezugsgrösse für die Fokussierung wirksam ist.

Fig. 6 zeigt zum Schluss, wie die Zunge 3 verlängert werden kann. Dazu kann die Zunge 3 in dem Wickelpaket eingewickelt und ggf. mit einer der Aluminiumfolien verbunden werden. Diese Zunge kann dann auf beiden Wickelseiten herausragen, wobei eines der Enden auf der Stirnseite des Wickels 1 mit Laserbündeln 16 festgeschweisst wird. Auf diese Weise kann die Zunge 3 eine zusätzliche Funktion haben, wie nach Fig. 6a über den Wickel 1 und dann die Scheibenöffnung z.B. zu dem Anodenanschluss mittels 18 oder nach Fig. 6b über den Wickelstift (6) zu der Umhüllung (20), die als Kathode wirksam ist. Im Rahmen der Erfindung sind viele Abwandlungen einer Kombination der lasergeschweissten Zunge mit der Verbindung zu der Umhüllung und/oder den Scheibenöffnungen möglich.

## Patentansprüche

Verfahren zur Herstellung eines elektrolytischen Wickelkondensators mit einer auf nur einer Seite mit einer Abdichtung versehenen metallenen Umhüllung und einem darin befindlichen gewickelten Gefüge aus einem durch Formierung mit einer dielektrischen Oxidhaut versehenen Streifen einer ersten Aluminiumfolie, zwei oder mehreren mit Elektrolytflüssigkeit oder mit einem festen Halbleitermetalloxid imprägnierten Trennfolien und einem Streifen einer gegebenenfalls formierten zweiten Aluminiumfolie, die zusammen zu einem Wickel aufgewickelt sind, wobei die Kathodenfolienwindungen und/oder die Anodenfolienwindungen in der Breitenrichtung gegenüber der bzw. den Trennfolie(n) zu den Stirnseiten des Wickels ausgewickelt sind und wobei eine Anzahl der auf diese Weise ausgewickelten Folienwindungen auf einer oder auf beiden Stirnseiten des Wickels mittels eines fest gehefteten Metallstreifens oder einer Metallplatte in Radialrichtung miteinander verbunden sind, dadurch gekennzeichnet, daß auf einer oder auf den beiden Stirnseiten des Wickels ein radial orientierter Streifen oder eine dünne Metallplatte gegen die ausgewickelten Folienwindungen gelegt und an zwei oder mehr Stellen mittels eines oder mehrerer Laserbündel darauf festgeschweißt wird.

## Claims

A method of manufacturing an electrolytic foil capacitor comprising a metal housing which is sealed on only one side, and in the said housing an assembly of a strip of a first aluminium foil which is provided with a dielectric oxide film by forming, two or more separator foils which are impregnated with liquid electrolyte or with a solid semiconductor metal oxide, and a strip of a second, whether or not formed, aluminium foil, the assembly being wound together to form a roll, the cathode-foil turns and/or the anode-foil turns extending widthwise beyond the separator foil (s) in the direction of the end faces of the roll, and a number of the said foil turns being radially interconnected at one or both end faces of the roll by means of a metal strip or sheet which is attached to the end face(s), characterized in that a radially-oriented tag or a thin metal sheet is located so as to lie against the projecting foil turns at one or both end faces of the roll, the said tag or sheet being welded thereto in one or more spots by means of one or a plurality of laser beams.

## Revendications

Procédé pour la fabrication d'un condensateur électrolytique enroulé, comportant une enveloppe métallique ouverte qui n'est munie que d'un côté d'une obturation et dans laquelle se trouve un ensemble enroulé d'une bande d'une feuille d'aluminium munie par formation d'une pellicule d'oxyde diélectrique, de deux ou plusieurs feuilles séparatrices imprégnées d'un liquide électrolytique ou d'un oxyde métallique semiconducteur liquide et d'une bande d'une deuxième feuille d'aluminium éventuellement formée qui sont enroulées ensemble de façon à obtenir un enroulement, les spires de feuille cathodique et/ou les spires de feuille anodique étant déroulées dans la direction de la largeur par rapport à respectivement la (les) feuille(s) de séparation vers les côtés terminaux de l'enroulement et plusieurs spires de feuille ainsi déroulées étant reliées entre

elles sur un côté terminal ou les deux d'un enroulement à l'aide d'une bande métallique attachée ou d'une plaque métallique dans la direction radiale, caractérisé en ce que sur un ou les deux cotés terminaux de l'enroulement, une bande orientée radialement ou une plaque métallique mince posée contre les spires de feuille déroulées est fixée par soudage à deux ou plusieurs endroits à l'aide d'un ou de plusieurs faisceaux laser.

FIG.1

FIG.2

FIG.3

FIG.4

FIG.5

FIG.6